# EUROPEAN PATENT APPLICATION

(11) **EP 4 124 494 A1**
(43) Date of publication of application: **01.02.2023**
(21) Application number: 21188916.7
(22) Date of filing: 30.07.2021
(51) Int. Cl.: B60L 3/00, B60L 58/21

(54) **ENERGY PROVISION SYSTEM, ENERGY PROVISION SYSTEM OPERATION METHOD AND COMMERCIAL VEHICLE WITH AN ENERGY PROVISION SYSTEM WITH REDUNDANT COMMUNICATION SYSTEM**

(71) Applicant: KNORR-BREMSE Systeme für Nutzfahrzeuge GmbH, 80809 München (DE)
(72) Inventor: KISS, David, 2066 Szár (HU); DERZSI, Andras, 2146 Mogyoród (HU); LINDNER, Peter, 2300 Ráckeve (HU); NEMETH, Huba, 1116 Budapest (HU)

(57) **Abstract**

The invention relates to an energy provision system, an energy provision system operation method and to a commercial vehicle with an energy provision system, and in particular relates to such a system with redundant power supply.

Disclosed is an energy provision system for a commercial vehicle, comprising: a first energy provision unit that is configured to provide energy and includes a first energy provision control unit configured to surveil operation parameters of the first energy provision unit, a second energy provision unit that is configured to store energy and includes a second energy provision control unit configured to surveil operation parameters of the second energy provision unit, and an internal communication unit that is configured to provide data communication exclusively within the energy provision system.

## Description

The invention relates to an energy supply system, an energy supply system operation method and to a commercial vehicle with an energy supply system, and in particular relates to such a system with redundant power supply.

Commercial vehicles, like trucks, tractor units or trailers, conventionally comprise various electrical consumer devices or appliances on-board. For example, such consumer devices can encompass vehicle on-board power supply systems, sensors, etc. Other consumer devices can encompass computer devices, communication systems, display devices, electronic control units or modules (ECU, ECM), etc. Furthermore, systems and devices for braking the vehicle are included. Still further, electrical systems for vehicle internal climate control like air heating systems or air conditioning devices may be installed.

Such systems may be of hierarchical relevance. Time critical systems like brakes and electronic control units or sensors related thereto may be of utmost importance at any time during operation of the vehicle, whereas other systems like internal climate control systems or entertainment systems may be of reduced relevance such that their operation may be suspended during operation of the vehicle if needed.

Further, for securely supplying such electrical consumers with electric energy, two or more redundant energy provision devices like battery storage units are installed in the vehicle. At least time critical systems are connected to at least two energy provision devices that are configured such that time critical systems may be supplied by a different energy provision if the current energy provision is going to fail electrical supply.

In current commercial vehicles, internal devices, inter alia the above mentioned electrical consumers and energy provisions are connected by and communicate via a vehicle CAN bus. However, in abnormal vehicle states, communication via the vehicle CAN bus may increase and may lead to communication congestion. In particular in an erroneous state, the vehicle CAN bus may be disturbed by a failing communicating system.

It is therefore an object of the present invention to provide an energy provision system, in particular a set of redundant electrical energy storage devices that enable secure operation even in a vehicle state, in which conventional energy provision may fail.

According to the present invention, this object is achieved by an energy provision system as defined in claim 1, a method as defined in claim 10 and a vehicle as defined in claim 13. Advantageous further developments are subject-matter of the dependent claims.

Disclosed is an energy provision system for a commercial vehicle, comprising: a first energy provision unit that is configured to provide energy and includes a first energy provision control unit configured to surveil operation parameters of the first energy provision unit, a second energy provision unit that is configured to store energy and includes a second energy provision control unit configured to surveil operation parameters of the second energy provision unit, and an internal communication unit that is configured to provide data communication exclusively within the energy provision system. In particular, there is a separate internal communication unit that is separate from a vehicle communication unit like a general vehicle CAN bus, that is provided for handling communication within the energy provision system.

With such a system, an independent redundant communication system between energy provision units is provided, such that in case of failure of one of the energy provision units, the information about the fault event or failure condition can be forwarded to the rest of the energy storage units and based on this information an individual adaptation of the redundant system working behavior and system parameters can be implemented.

Advantageously, in the energy provision system, the first energy provision unit comprises a first electrical energy storage device, in particular a first battery device, and the second energy provision unit comprises a second electrical energy storage device, in particular a second battery device. Or advantageously, the energy provision system is connectable to one or more energy consumer devices in a manner such that the energy consumer device is provided with energy by the first energy provision unit or the second energy provision unit.

The energy provision system is in particular advantageous with electric devices and in particular in allelectric driven vehicles. However, the system can be provided in a hybrid vehicle as well.

Advantageously, in the energy provision system the energy provision system further comprises an energy provision switching unit and the energy provision switching unit is configured to switch an energy supply path of the energy consumer device between the first energy provision unit and the second energy provision unit such that the energy consumer device is provided with energy by the first energy provision unit or the second energy provision unit.

Such a configuration allows to switch energy supply from one energy source to another energy source (the respective energy provision units), in particular during overburdening or failure of the one energy source, such that operation in particular of time critical energy consumer devices like electric brakes may be maintained.

Advantageously, in the energy provision system, the energy provision system further comprises one or more energy provision switching units associated with the one or more energy consumer devices, respectively, and the energy provision switching unit is configured to switch an energy supply path of the associated energy consumer between the first energy provision unit and the second energy provision unit such that the energy consumer device is supplied with energy by the first energy provision unit or the second energy provision unit.

Such a configuration allows for individual switching of energy consumers to optimize energy supply.

Advantageously, in the energy provision system, the internal communication unit is configured to provide data communication between the first energy provision unit and the second energy provision unit.

With such a system, an independent redundant communication system between energy provision units is provided, such that in case of failure of one of the energy provision units, the information about the fault event or failure condition can be forwarded to the rest of the energy storage units and based on this information an individual adaptation of the redundant system working behavior and system parameters can be implemented.

Advantageously, in the energy provision system, the internal communication unit is configured to provide data communication for the energy provision switching unit.

Such a configuration allows to switch energy supply from one energy source to another energy source, in particular during overburdening or failure of the one energy source, such that operation in particular of time critical energy consumer devices like electric brakes may be maintained.

Advantageously, in the energy provision system the internal communication unit is configured to communicate via the CAN bus serial bus system.

Such a configuration allows employing known, reliable, tested and proven technology.

Advantageously, in the energy provision system the energy provision system is configured to be connected to an external communication unit such that members of the energy provision system are capable of data transmission to data transmission capable members of the vehicle not forming part of the energy provision system.

Such a configuration allows to directly control energy consumer devices and may reduce the amount of required energy by tuning down or switching off not-essential energy consumer devices.

Disclosed is a method of operating the energy provision system as described above, comprising the steps: a) surveilling operation parameters of the first energy provision unit and the second energy provision unit, b) transmitting information on the parameters surveilled in step a) between the first energy provision unit and the second energy provision unit via the internal communication unit.

By operating according to such a method, an independent redundant communication system between energy provision units is provided, such that in case of failure of one of the energy provision units, the information about the fault event or failure condition can be forwarded to the rest of the energy storage units and based on this information an individual adaptation of the redundant system working behavior and system parameters can be implemented.

Advantageously, the method of operating the energy provision system comprises the step: c) controlling the energy provision system such that energy supply for the energy consuming device is switched from the first energy provision unit to the second energy provision unit.

Such a method of operation allows to switch energy supply from one energy source to another energy source, in particular during overburdening or failure of the one energy source, such that operation in particular of time critical energy consumer devices like electric brakes may be maintained.

Advantageously, in the method of operating the energy provision, system step c) comprises: ca) operating the energy provision switching unit to switch an energy supply path of the energy consumer device between the first energy provision unit and the second energy provision unit such that the energy consumer device is provided with energy by the first energy provision unit or the second energy provision unit.

Such a configuration allows for individual switching of energy consumers to optimize energy supply.

Disclosed is a commercial vehicle, in particular an electric vehicle, in particular a battery electric or fuel cell electric vehicle, or hybrid vehicle, in particular any kind of commercial vehicle with automated assistance functions and/or highly automated driving functions comprising the above energy provision system.

Preferably, the vehicle is configured as a commercial vehicle, a truck, a trailer, a bus, and/or a combination of a towing vehicle and a trailer.

In the following, embodiments of the invention are described by means of the figures.
**Figure 1** exhibits a first embodiment of an energy provision system for a commercial vehicle according to the invention.
**Figure 2** exhibits a second embodiment of an energy provision system for a commercial vehicle according to the invention.
**Figure 3** exhibits a third embodiment of an energy provision system for a commercial vehicle according to the invention

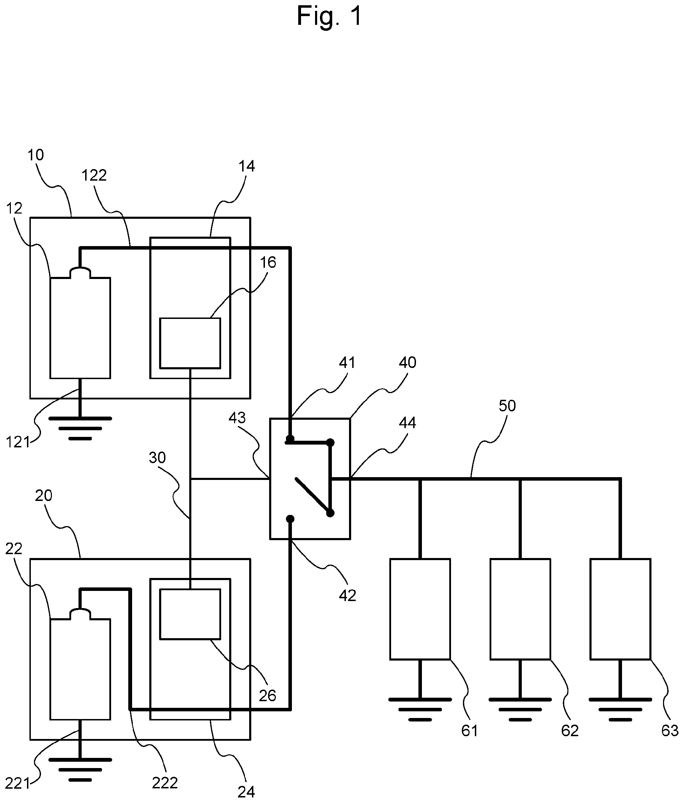

A first embodiment of the invention is explained by means of **Fig. 1****.**

**Fig. 1** exhibits a schematic drawing of an Energy provision system for a commercial vehicle. A commercial vehicle comprises a first energy provision unit 10 that is mounted to the chassis of the commercial vehicle (not shown). The first energy provision unit 10 comprises a first energy storage device 12. The first energy storage device 12 is configured as an electrical energy storage device, in particular a first battery. The first energy provision unit 10 further comprises a first energy provision control unit 14 that is configured to control and surveil the first energy provision unit 10. In particular, operational parameters like external temperature or device temperature, battery load or battery charge are surveilled as well as a functioning state.

The first energy provision control unit 14 comprises a first communication module 16 that is configured to perform data transmission via a data communication medium 30. In the present embodiment, communication is performed via the CAN bus protocol. However, any other suitable protocol, irrespective of wired or wireless, is applicable.

A negative battery terminal 121 of the first energy storage device 12 is connected to electrical ground, e.g. a chassis of the vehicle. A positive battery terminal 122 is connected to the first energy provision control unit 14 such that the first energy provision control unit 14 may control an operation power or charging power.

The commercial vehicle comprises a second energy provision unit 20 that is mounted to the chassis of the commercial vehicle (not shown). The second energy provision unit 20 comprises a second energy storage device 22. The second energy storage device 22 is configured as an electrical energy storage device, in particular a second battery. The second energy provision unit 20 further comprises a second energy provision control unit 24 that is configured to control and surveil the second energy provision unit 20. In particular, operational parameters like external temperature or device temperature, battery load or battery charge are surveilled as well as a functioning state.

The second energy provision control unit 24 comprises a second communication module 26 that is configured to perform data transmission via the data communication medium 30. In the present embodiment, communication is performed via the CAN bus protocol. However, any other suitable protocol, irrespective of wired or wireless, is applicable.

The first communication module 16, the second communication module 26 and the data communication medium 30 are independent of a common vehicle communication system, i.e. a common vehicle CAN bus. The first energy provision unit 10 and the second energy provision unit 20 may be in addition connected to the common vehicle communication system.

A negative battery terminal 221 of the second energy storage device 22 is connected to electrical ground, e.g. a chassis of the vehicle. A positive battery terminal 222 is connected to the second energy provision control unit 24 such that the second energy provision control unit 24 may control an operation power or charging power.

A switching unit 40 is provided in the commercial vehicle. The switching unit 40 comprises a connection to the positive terminal 122 of the first energy storage device 12 as a first input 41, a connection to the positive terminal 222 of the second energy storage device 22 as a second input 42. The switching unit 40 is further connected to the data communication medium 30 via a switching unit communication interface 43 such that the switching unit 40 is capable of communicating via the internal CAN bus. The switching unit 40 further comprises an output 44. The switching unit 40 is configured to switch between the first input 41 and the second input 42 such that via the output 44, electrical energy is provided either from the first energy provision unit 10 or the second energy provision unit 20 or the first energy provision unit 10 and the second energy provision unit 20. Via the first energy provision control unit 14, the second energy provision control unit 24, and the data communication medium 30, the switching unit 40 may be controlled to either provide electrical energy of the first energy provision unit 10 or the second energy provision unit 20 or the first energy provision unit 10 and the second energy provision unit 20. Thus, in normal operation, the first energy provision unit 10 and the second energy provision unit 20 may serve for electrical energy provision. In a case of a failure state of one of the energy provision units 10, 20, this failing energy provision unit may be separated from energy provision. In such a situation, the switching unit 40 provides the function of a separation unit.

Via an insulated power line 50, energy consumer devices 61, 62, 63 are provided with electrical energy via the switching device 40. The energy consumer devices 61, 62, 63 are themselves connected to electrical ground, e.g. by connecting them to the vehicle's chassis. The energy consumer devices 61, 62, 63 are e.g. sensors, computer devices, communication systems, display devices, electronic control units or modules (ECU, ECM), devices or actuators for braking the vehicle, e.g. a main braking system or a secondary braking system, devices or actuators for steering the vehicle, or devices for vehicle internal climate control like air heating devices or air conditioning devices.

During operation of the vehicle, the first energy provision control unit 14 and the second energy provision control unit 24 surveille the first energy provision unit 10 and the second energy provision unit 20 and communicate via the first communication module 16, the second communication module 26 and the communication medium 30. If a faulty state is detected by one of the energy provision control units 14, 24, e.g. an overheating, energy supply of the energy consumer devices 61, 62, 63 may be switched from the faulty energy provision unit to the working energy provision unit via the energy provision switching unit 40.

Since the data communication medium 30 and the internal CAN bus is isolated from a common vehicle external CAN bus, the communication within the energy provision system is independent from the communication and the state of the external CAN bus.

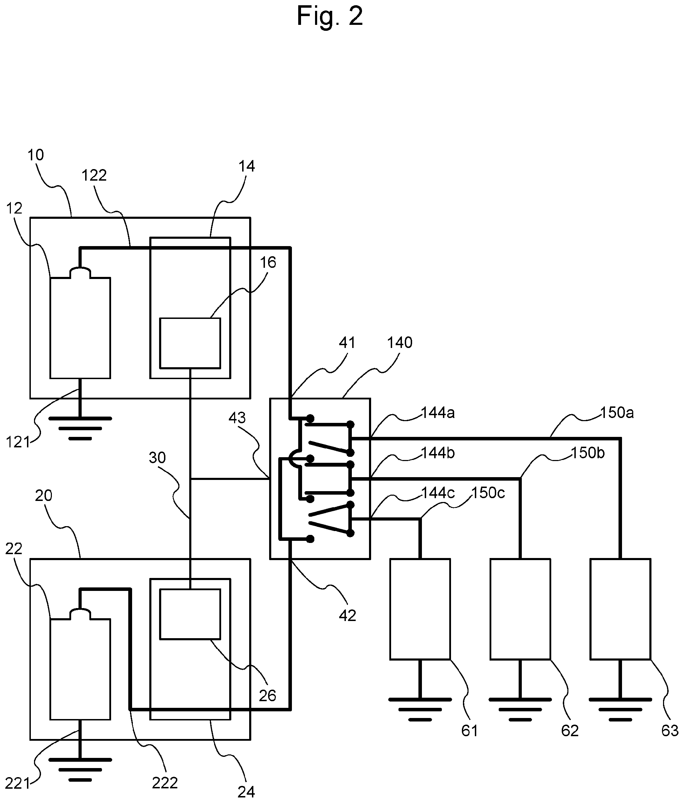

A second embodiment of the invention is explained by means of **Fig. 2****.**

**Fig. 2** exhibits a schematic drawing of an energy provision system for a commercial vehicle. The second embodiment is configured like the first embodiment. In the following, only such parts are described, that deviate from the first embodiment. For description of the configuration of such parts, reference is made to the first embodiment.

The first energy provision unit 10, the second energy provision unit 20, the data communication medium 30 and the energy consumer devices 61, 62, 63 are identical like in the first embodiment.

An energy provision switching unit 140 is configured like in the first embodiment except for that it contains separate outputs: first output 144a, second output 144b and third output 144c. Via a first insulated power line 150a, a second insulated power line 150b, and a third insulated power line 150c, energy consumer devices 61, 62, 63 are individually provided with electrical energy via the energy provision switching unit 140. The energy provision switching unit 140 is configured to switch individual energy consumer devices 61, 62, 63 to either be supplied by the first energy provision unit 10 or the second energy provision unit 20,to be not supplied with energy at all or to be supplied with energy by the first energy provision unit 10 and the second energy provision unit 20. In a case of a failure state of one of the energy provision units 10, 20, this failing energy provision unit may be separated from energy provision. In such a situation, the switching unit 140 provides the function of a separation unit.

Like in the first embodiment, during operation of the vehicle, the first energy provision control unit 14 and the second energy provision control unit 24 surveille the first energy provision unit 10 and the second energy provision unit 20 and communicate via the first communication module 16, the second communication module 26 and the communication medium 30. If a faulty state of one of the energy provision control units 14, 24 is detected, e.g. an overheating, energy supply of the energy consumer devices 61, 62, 63 may be switched from the faulty energy provision unit 10, 20 to the working energy provision unit 10, 20 via the energy provision switching unit 140. E.g. if an energy provision unit overheats, one or more energy consumer devices 61, 62, 63 that are supplied by this energy provision unit 10, 20 with electrical energy may be switched to be supplied by the other energy provision unit 10, 20. If also the other energy provision unit 10, 20 is not in the position to supply energy to the energy consumer device 61, 62, 63, it may be decided to switch the corresponding energy consumer device 61, 62, 63 off, when it is determined that the corresponding energy consumer device 61, 62, 63 is a non-essential device, or to maintain the energy consumer device 61, 62, 63 active despite the overheating of the energy provision unit 10, 20 and to endure the overheating, if it is determined that the energy consumer device 61, 62, 63 is an essential device.

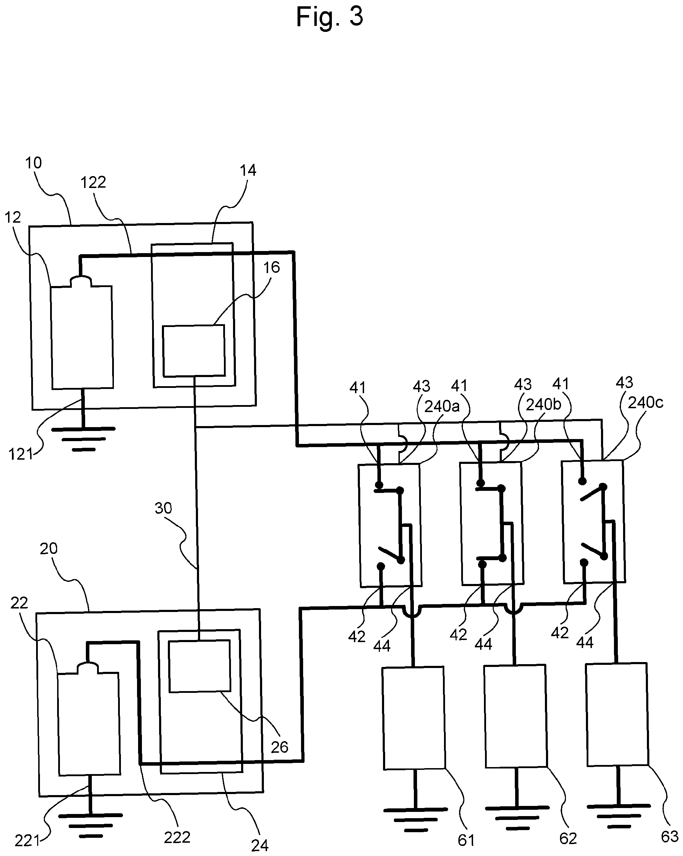

A third embodiment of the invention is explained by means of **Fig. 3****.**

**Fig. 3** exhibits a schematic drawing of an energy provision system for a commercial vehicle. The third embodiment is configured like the first embodiment. In the following, only such parts are described, that deviate from the first embodiment. For description of the configuration of such parts, reference is made to the first embodiment.

The first energy provision unit 10, the second energy provision unit 20, the data communication medium 30 and the energy consumer devices 61, 62, 63 are identical like in the first embodiment.

Further, a first energy provision switching unit 240a, a second energy provision switching unit 240b and a third energy provision switching unit 240c are provided. The first energy provision switching unit 240a, the second energy provision switching unit 240b and the third energy provision switching unit 240c are configured identical to the energy provision switching unit 40 of the first embodiment. In particular, the first energy provision switching unit 240a, the second energy provision switching unit 240b and the third energy provision switching unit 240c comprise connections to the positive terminal 122 of the first energy storage device 12 via the respective first input 41 and a connection to the positive terminal 222 of the second energy storage device 22 via the respective second input 42. The switching units 240a, 240b, 240c are further connected to the data communication medium 30 via respective switching unit communication interfaces 43 such that the switching units 240a, 240b, 240c are capable of communicating via the internal CAN bus.

The respective switching unit outputs 44 of the first energy provision switching unit 240a, the second energy provision switching unit 240b and the third energy provision switching unit 240c are connected to the energy consumer devices 61, 62, 63, individually. I.e. there is one individual energy provision switching unit 240a, 240b, 240c for each energy consumer device 61, 62, 63, respectively. Like in the second embodiment, the energy provision system is configured to switch individual energy consumer devices to either be supplied by the first energy provision unit 10 or the second energy provision unit 20, to be not supplied with energy at all or to be supplied with energy by the first energy provision unit 10 and the second energy provision unit 20. In a case of a failure state of one of the energy provision units 10, 20, this failing energy provision unit may be separated from energy provision. In such a situation, the switching units 240a, 240b, 240c provide the function of a separation unit.

Like in the second embodiment, during operation of the vehicle, the first energy provision control unit 14 and the second energy provision control unit 24 surveille the first energy provision unit 10 and the second energy provision unit 20 and communicate via the first communication module 16, the second communication module 26 and the communication medium 30. If a faulty state is detected by one of the energy provision control units 14, 24, e.g. an overheating, energy supply of the energy consumer devices 61, 62, 63 may be switched from the faulty energy provision unit 10, 20 to the working energy provision unit 10, 20 via the respective energy provision switching unit 240a, 240b, 240c. E.g. if an energy provision unit 10, 20 overheats, one or more energy consumer devices 61, 62, 63 that are supplied by this energy provision unit 10, 20 with electrical energy may be switched to be provided with energy by the other energy provision unit 10, 20. If also the other energy provision unit 10, 20 is not in the position to supply energy to the energy consumer device 61, 62, 63, it may be decided to switch the corresponding energy consumer device 61, 62, 63 off, when it is determined that the corresponding energy consumer device 61, 62, 63 is a non-essential device, or to maintain the energy consumer device 61, 62, 63 active despite the overheating of the energy provision unit 10, 20 and to endure the overheating, if it is determined that the energy consumer device 61, 62, 63 is an essential device.

The invention was described by means of several embodiments. The embodiments are only of explanatory nature and do not restrict the invention as defined by the claims. As recognizable by the skilled person, deviations from the embodiments are possible without leaving the invention that is defined according to the scope of the claimed subject-matter.

For example, the above embodiments are described such that the energy consumer devices are connected to the first energy provision unit 10 and the second energy provision unit 20 to the positive terminals only via one insulated power line 50 and are connected to the negative terminals only via electrical ground, i.e. the vehicle's chassis. In particular with higher voltages, the connection to the negative terminals may also be led via an insulated conductor.

Further, in the embodiments, two redundant energy provision units 10, 20 are provided to provide security for the case that one of them fails. However, also three or more redundant energy provision units may be provided and may form the energy provision system.

Thus, the features of the above embodiments may be exchanged between the embodiments

A commercial vehicle in the sense of this document is any vehicle, either self-driven or towed, for transporting goods or freight. These are in particular HGV, trucks, tractor units or trailers.

A main braking system in the sense of this document is a braking system that is configured to serve for vehicle deceleration during operation, in particular during movement of the vehicle.

A secondary braking system in the sense of this document is a braking system that is configured to serve as a backup for the main braking system and/or that is configured to provide a continuous locking function to maintain a vehicle's position.

An energy provision unit is a device configured to provide energy. This may be in particular electrical energy. The provision of energy may for example occur by converting stored chemical energy into electrical energy, like e.g. with electrical batteries and accumulators, fuel cells in connection with an O2-supply, or converting heat energy into electrical energy, like e.g. with internal combustion engine driven or turbine driven generator or RTG.

An energy consumer device is a device consuming energy, in particular electrical energy. Energy consumer devices are for example sensors, computer devices, communication systems, display devices, electronic control units or modules (ECU, ECM), devices for braking the vehicle, or devices for vehicle internal climate control like air heating devices or air conditioning devices.

An internal communication unit is data transmission equipment that is configured to provide data communication exclusively within an energy provision system, i.e. to provide data communication only between devices that form part of the energy provision system. This is e.g. a communication CAN-bus directly and exclusively connecting a first energy provision unit and a second energy provision unit.

An external communication unit is a general vehicle communication infrastructure that connects devices of the vehicle for provision of data communication, e.g. a vehicle wide CAN bus.

An association of an energy provision switching unit with an electrical consumer device describes that a specific energy provision switching unit is configured to switch the energy supply for one specific electrical consumer from one energy supply to another energy supply.

In this document, the terms "and", "or" and "either... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims and the description, the word "comprising" does not denote a closed list of elements or steps, but an open list. Thus, further elements or steps are not excluded.

The indefinite article "a" or "an" does not exclude a plurality and has to be understood as "at least one".

### LIST OF REFERENCE NUMBERS

- 10: first energy provision unit
- 12: first energy storage device,
first electrical energy storage device,
first battery
- 121: negative terminal
- 122: positive terminal
- 14: first energy provision control unit
- 16: first communication module
- 20: second energy provision unit
- 22: second energy storage device,
second electrical energy storage device,
second battery
- 221: negative terminal
- 222: positive terminal
- 24: second energy provision control unit
- 26: second communication module
- 30: data communication medium,
internal CAN bus
- 40: energy provision switching unit
- 41: first switching unit input
- 42: second switching unit input
- 43: switching unit communication interface
- 44: switching unit output
- 50: insulated power line
- 61, 62, 63: energy consumer devices

- 140: energy provision switching unit (second embodiment)
- 144a: first switching unit output
- 144b: second switching unit output
- 144c: third switching unit output
- 150a: first insulated power line
- 150b: second insulated power line
- 150c: third insulated power line

- 240a: first energy provision switching unit (third embodiment)
- 240b: second energy provision switching unit
- 240c: third energy provision switching unit

## Claims

1. An energy provision system for a commercial vehicle, comprising:
a first energy provision unit (10) that is configured to provide energy and includes a first energy provision control unit (14) configured to surveil operation parameters of the first energy provision unit (10),
a second energy provision unit (20) that is configured to store energy and includes a second energy provision control unit (24) configured to surveil operation parameters of the second energy provision unit (20), and
an internal communication unit (16, 26, 30) that is configured to provide data communication exclusively within the energy provision system.

2. The energy provision system according to the previous claim, wherein the first energy provision unit (10) comprises a first electrical energy storage device (12), in particular a first battery device, and the second energy provision unit (20) comprises a second electrical energy storage device (22), in particular a second battery device.

3. The energy provision system according to any of the previous claims, wherein the energy provision system is connectable to one or more energy consumer devices (61, 62, 63) in a manner such that the energy consumer device (61, 62, 63) is provided with energy by the first energy provision unit (10) and/or the second energy provision unit (20).

4. The energy provision system according to the previous claim, wherein
the energy provision system further comprises an energy provision switching unit (40, 140) and
the energy provision switching unit (40, 140) is configured to switch an energy supply path of the one or more energy consumer devices (61, 62, 63) between the first energy provision unit (10) and the second energy provision unit (20) such that the energy consumer device (61, 62, 63) is provided with energy by the first energy provision unit (10) and/or the second energy provision unit (20).

5. The energy provision system according to claim 3, wherein
the energy provision system further comprises one or more energy provision switching units (240a, 240b, 240c) associated with the one or more energy consumer devices (61, 62, 63), respectively, and
the one or more energy provision switching units (240a, 240b, 240c) are configured to switch an energy supply path of the associated energy consumer device (61, 62, 63) between the first energy provision unit (10) and the second energy provision unit (20) such that the energy consumer device (61, 62, 63) is supplied with energy by the first energy provision unit (10) or the second energy provision unit (20).

6. The energy provision system according to any of the previous claims, wherein the internal communication unit (16, 26, 30) is configured to provide data communication between the first energy provision unit (10) and the second energy provision unit (20).

7. The energy provision system according to any of the previous claims as far as they relate back to claims 4 to 6, wherein the internal communication unit (16, 26, 30) is configured to provide data communication for the energy provision switching unit (40, 140, 240a, 240b, 240c).

8. The energy provision system according to any of the previous claims, wherein the internal communication unit (16, 26, 30) is configured to communicate via the CAN bus serial bus system.

9. The energy provision system according to any of the previous claims, wherein the energy provision system is configured to be connected to an external communication unit such that members of the energy provision system are capable of data transmission to data transmission capable members of the vehicle not forming part of the energy provision system.

10. A method of operating the energy provision system according to any of the previous claims, comprising the steps:
a) surveilling operation parameters of the first energy provision unit (10) and the second energy provision unit (20),
b) transmitting information on the parameters surveilled in step a) between the first energy provision unit (10) and the second energy provision unit (20) via the internal communication unit (16, 26, 30).

11. The method of operating the energy provision system according to the previous claim, comprising the step:
c) controlling the energy provision system such that energy supply for the energy consuming device (61, 62, 63) is switched from the first energy provision unit (10) to the second energy provision unit (20).

12. The method of operating the energy provision system according to the previous claim, wherein step c) comprises:
ca) operating the energy provision switching unit (40, 140, 240a, 240b, 240c) to switch an energy supply path of the energy consumer device (61, 62, 63) between the first energy provision unit (10) and the second energy provision unit (20) such that the energy consumer device (61, 62, 63) is provided with energy by the first energy provision unit (10) or the second energy provision unit (20).

13. A commercial vehicle, in particular an electric vehicle, in particular a battery electric or fuel cell electric vehicle, or hybrid vehicle, comprising the energy provision system according to any of the claims 1-9.
